# EUROPÄISCHE PATENTSCHRIFT

(11) **EP 3 599 084 B1**
(45) Veröffentlichungstag und Bekanntmachung des Hinweises auf die Patenterteilung: **23.08.2023**
(21) Anmeldenummer: 19188176.2
(22) Anmeldetag: 24.07.2019
(51) Int. Cl.: B29C 70/46, B29D 99/00, B29C 70/34

(54) **VERFAHREN ZUM HERSTELLEN EINES FASERKUNSTSTOFFVERBUNDES**
METHOD FOR PRODUCING A SYNTHETIC FIBRE COMPOSITE
PROCÉDÉ DE FABRICATION D'UN COMPOSITE EN MATIÈRE PLASTIQUE FIBREUSE

(30) Priorität: 24.07.2018 DE 102018117888
(43) Veröffentlichungstag der Anmeldung: 29.01.2020
(73) Patentinhaber: Technische Universität Dresden, 01069 Dresden (DE)
(72) Erfinder: CHERIF, Chokri, 01219 Dresden (DE); STAIGER, Elias, 01309 Dresden (DE)
(74) Vertreter: Canzler & Bergmeier Patentanwälte Partnerschaft mbB

(56) Entgegenhaltungen:
- DE-A1- 10 114 553
- DE-A1-102010 028 433
- US-A1- 2015 017 390

## Beschreibung

Die Erfindung betrifft ein Verfahren zum Herstellen eines Faserkunststoffverbundes.

Der Einsatz von Faserkunststoffverbundbauteilen (FKV) ist mittlerweile weit verbreitet. Zur Herstellung des entsprechenden Halbzeugs werden Fasern in eine thermoplastische Matrix eingebettet und dieses Halbzeug dann unter Druck- und Wärmeapplikation in die endgültige Form überführt.

Bei der Herstellung von komplexeren Bauteilen, insbesondere solchen mit Funktionsstrukturen, beispielsweise in Form von Rippen, wird ein zweistufiger Prozess durchgeführt. In einem ersten Schritt wird das flächige Halbzeug in seine gewünschte Bauteilform gebracht, um dann in einem zweiten Schritt die Funktionsstrukturen nachträglich an dieses Bauteil anzuspritzen. Dieser Schritt kann entweder direkt nach der Erstellung des Bauteils oder in einem gänzlich separaten Arbeitsgang mit zusätzlichem Werkzeug erfolgen.

Das Anspritzen von Funktionsstrukturen im Werkzeug erfordert die Konstruktion aufwändiger und teurer Werkzeuge, die ein Anspritzen von Kunststoff durch entsprechende Kanäle über einen separaten Extruder erlauben. Dieses Vorgehen stellt somit eine aufwändige Verfahrenskombination aus Konsolidieren und Spritzgießen dar, wofür ein hoher technologischer Aufwand erforderlich ist. Das nachträgliche Anspritzen ist dementsprechend mit einem technologischen Mehraufwand und einer Verlängerung der Prozesskette verbunden. Außerdem entsteht eine mechanische Schwachstelle am Übergang des flächigen Bauteils zu den angespritzten Strukturen, die eine Delaminationsgefahr bei Beanspruchung birgt. Der Grund ist, dass der angespritzte Kunststoff auf dem FKV-Bauteil erstarrt, wodurch ein inhomogener Übergang zwischen beiden Strukturen ausgebildet wird. Insbesondere besteht zwischen dem flächigen Bauteil und der angespritzten Struktur, beispielsweise einer Rippe, keine durchgängige Faserverstärkung, was die Beanspruchbarkeit bzw. Tragfähigkeit der Bauteile deutlich reduziert.

Aus der US 2015/0017390 A1 ist es bekannt, endlose Verstärkungsfasern mit einer Länge von mehreren Metern in eine thermoplastische Matrix einzubetten und dieses Halbzeug dann unter Druck- und Wärmeapplikation in ein Presswerkzeug mit Kavitäten einzubringen. Die hierbei aufschmelzende thermoplastische Matrix fließt dann in die Kavitäten und zieht die endlosen Verstärkungsfasern, die bei der Druck- und Wärmeapplikation nicht schmelzen, mit. Nach Abkühlen und Öffnen des Presswerkzeugs wird ein verstärkter Faserkunststoffverbund erhalten. Nachteilig bei diesem bekannten Verfahren ist, das die Verwendung der vorgeschlagenen textilen Halbzeuge zu einem Verzug und damit zu einer nicht mehr lastgerechten Anordnung der Verstärkungsfäden in großen Bauteilbereichen führen. Die mechanischen Eigenschaften der erhaltenen Bauteile sind daher oft nicht zufriedenstellend.

Die DE 101 14 553 A1 betrifft ein kontinuierliches Verfahren zur Herstellung von thermoplastisch verformbarem, dickem Halbzeug aus einem thermoplastischen Kunststoff und Verstärkungsfasern. Es umfasst folgende Schritte:
A. Thermoplastfasern und Verstärkungsfasern werden trocken zu einem Mischvlies vermischt,
B. das Mischvlies wird durch Nadeln verfestigt,
C. das verfestigte Mischvlies wird erwärmt und
D. zum Halbzeug verpresst.

Es ist Aufgabe der vorliegenden Erfindung, ein Verfahren zum Herstellen eines Faserkunststoffverbundes zur Verfügung zu stellen, welches dessen Herstellung vereinfacht und keine nennenswerten mechanischen Schwachstellen aufweist.

Diese Aufgabe wird durch die Merkmale des Anspruchs 1 gelöst.

Gemäß der Erfindung wird mindestens ein sich flächig erstreckendes, vorzugsweise ebenes, textiles Halbzeug, das mindestens Verstärkungsfasern und Thermoplastfasern enthält, in den Innenraum eines Presswerkzeugs eingebracht, vorzugsweise eingelegt. Hierbei ist der besagte Innenraum durch Oberflächen von mindestens einem ersten und zweiten Pressteil des Presswerkzeugs begrenzt. Weiterhin ist zumindest in einer der besagten Oberflächen mindestens eine Kavität ausgebildet, die vom eingebrachten mindestens einen textilen Halbzeug nicht ausgefüllt wird. Das textile Halbzeug wird im Presswerkzeug über die Schmelztemperatur oder den Schmelztemperaturbereich der Thermoplastfasern erhitzt. Durch diese Maßnahme schmelzen die Thermoplastfasern, wobei das erste und/oder das zweite Pressteil derart nachgeführt werden, dass der Thermoplast zu fließen beginnt und in die mindestens eine Kavität eindringt. Bei dieser Bewegung nimmt der Thermoplast Verstärkungsfasern mit, so dass nun in der mindestens einen Kavität eine Thermoplastmatrix und in ihr eingebettete Verstärkungsfasern vorhanden sind. Anschließend wird das textile Halbzeug in dem Presswerkzeug konsolidiert, indem das textile Halbzeug unter die Erstarrungstemperatur des Thermoplasts abgekühlt wird, um schließlich den Faserkunststoffverbund aus dem Presswerkzeug zu entnehmen.

Grundsätzlich können die Kavitäten Geometrien unterschiedlichster Komplexität aufweisen, einschließlich von beispielsweise Hinterschneidungen. Auch die Anzahl an Kavitäten in dem Werkzeug ist prinzipiell keinen Beschränkungen unterworfen.

Das erfindungsgemäße Verfahren ist ein Fließpressverfahren, bei dem die Pressteile relativ zueinander entsprechend dem Aufschmelzen der Thermoplastfasern nachgeführt werden, damit durch diesen werkzeugseitigen Verdrängungsprozess die Verstärkungsfasern zusammen mit dem geschmolzenen Thermoplast in die Kavitäten eindringen können. Erfindungsgemäß werden Thermoplastfasern im Gegensatz zu einem ausschließlich als Matrix vorliegenden Thermoplast eingesetzt, um eine größere Variabilität bei der Strukturierung und dem Aufbau des mindestens einen textilen Halbzeugs zu realisieren.

Durch das Eindringen des Thermoplasts mit Verstärkungsfasern in die mindestens eine Kavität, die das negative Abbild der gewünschten Funktionsstruktur darstellt, wird in dieser Kavität die gewünschte Funktionsstruktur realisiert. Im Ergebnis wird durch das erfindungsgemäße Verfahren eine durchgehende Faserverbundstruktur erhalten, welche keine der im Stand der Technik vorhandenen mechanischen Schwachstellen enthält. Ein Anspritzen oder Injizieren von Kunststoff zur Herstellung von Funktionsstrukturen ist bei dem erfindungsgemäßen Verfahren hinfällig. Mechanisch instabile Grenzflächen werden vermieden. Vielmehr sind nun im gesamten FKV-Bauteil, d.h. auch im Übergangsbereich und in den Funktionsstrukturen, Verstärkungsfasern vorhanden.

Die Funktionsstrukturen können beispielsweise rippenartig ausgebildet sein. Je nach Anforderungsprofil des Faserkunststoffverbundes bzw. des FKV-Bauteils können die unterschiedlichsten Funktionsstrukturen mittels des erfindungsgemäßen Verfahrens realisiert werden.

Erfindungsgemäß wird ein textiles Halbzeug verwendet, das zumindest teilweise aus Thermoplastfasern und Verstärkungsfasern besteht. Hierbei schmilzt zumindest ein Teil der Thermoplastfasern beim besagten Erhitzen. Diese bilden dann bei der Verbundherstellung zumindest einen Teil der Thermoplastmatrix bzw. vollständig die Thermoplastmatrix, wenn außer den Thermoplastfasern keine weiteren Thermoplaststrukturen im ausgangsseitigen textilen Halbzeug vorhanden sind.

Bei dem erfindungsgemäßen Verfahren wird mindestens ein textiles Halbzeug verwendet, das eine inhomogene Verteilung der Verstärkungsfasern und/oder der Thermoplastfasern aufweist. Eine solche inhomogene Verteilung kann beispielsweise durch unterschiedliche lokale Garndichten von ansonsten homogenen, Thermoplastfasern und Verstärkungsfasern enthaltenden Garnen, z.B. Hybridgarnen, realisiert werden. Alternativ oder zusätzlich kann eine besagte inhomogene Verteilung mit unterschiedlichen, Thermoplastfasern und Verstärkungsfasern enthaltenden Garnen, z.B. Hybridgarnen, in benachbarten Bereichen des mindestens einen textilen Halbzeugs erreicht werden. Weiterhin kann alternativ oder zusätzlich die besagte inhomogene Verteilung durch über ihre Länge inhomogene, Thermoplastfasern und Verstärkungsfasern enthaltende Garne, z.B. Hybridgarne, realisiert werden. Die vorgenannten inhomogenen Verteilungen lassen sich auch jeweils für die Thermoplastfasern oder die Verstärkungsfasern unabhängig voneinander realisieren, insbesondere wenn diese nicht in Form von Hybridgarnen vorliegen. Durch gezieltes Herstellen von den besagten inhomogenen Verteilungen kann das Auflöse- und Fließverhalten der Thermoplastfasern und/oder das Fließverhalten der Verstärkungsfasern in Abhängigkeit von deren jeweiligen Verteilung in dem mindestens einen textilen Halbzeug als auch in Abhängigkeit von der Geometrie des Presswerkzeugs einschließlich der mindestens einen Kavität beeinflusst werden, um eine gewünschte Stabilität des fertigen Faserkunststoffverbundes zu erhalten.

Es ist vorteilhaft, wenn ein textiles Halbzeug für das erfindungsgemäße Verfahren verwendet wird, bei dem Thermoplastfasern und Verstärkungsfasern, vorzugsweise alle Verstärkungsfasern und Thermoplastfasern, in einem Hybridgarn vorliegen. Die Thermoplastfasern weisen hierbei vorzugsweise ein einstellbares Auflöseverhalten auf, so dass das Erhitzen und Formen des Halbzeugs präzise kontrollierbar ist. Es können unterschiedlichste Arten von Hybridgarnen zum Einsatz kommen. Beispielsweise können die einzelnen Fasern der Verstärkungsfasern und der Thermoplastfasern im Wesentlichen nebeneinander verlaufen, ohne dass sie speziell miteinander verbunden wären. Alternativ können beispielsweise Thermoplastfasern um Verstärkungsfasern spiralförmig herumgewunden sein, wobei Wicklungen mit oder ohne freibleibende Oberflächenbereiche der Verstärkungsfasern möglich sind. Bei einer weiteren Alternative sind die Verstärkungsfasern und die Thermoplastfasern miteinander verzwirnt. Auch können Thermoplastfasern als Endlosfasern bzw. Filamente vorliegen und beispielsweise die Seele eines Coregarns bilden, das mit endlich langen Verstärkungsfasern, beispielsweise im Längenbereich von 30 mm bis 100 mm Faserlänge, umsponnen ist. Andere Anordnungen der Verstärkungsfasern und der Thermoplastfasern relativ zueinander zur Bildung von Hybridgarnen sind ohne Weiteres möglich. Zudem ist es möglich, dass unterschiedliche, Verstärkungsfasern und Thermoplastfasern enthaltende Hybridgarne, beispielsweise mehrere der oben beschriebenen, unterschiedlichen Hybridgarne, in einem textilen Halbzeug zum Einsatz kommen.

Alternativ oder zusätzlich wird ein textiles Halbzeug verwendet, bei dem Verstärkungsfasern mit thermoplastischen Bindefasern verbunden sind, wobei zumindest ein Teil der thermoplastischen Bindefasern beim besagten Erhitzen schmilzt. Mittels solcher Bindefasern ist - bei entsprechendem strukturellem Aufbau des Halbzeugs - ein gezieltes Herauslösen von Verstärkungsfasern aus dem vorzugsweise ebenen textilen Halbzeug möglich.

Auch ist es möglich, ein textiles Halbzeug zu verwenden, bei dem zusätzlich zu den besagten Thermoplastfasern ein Teil der Verstärkungsfasern in einer Thermoplastmatrix eingebettet ist, die dann bei einer entsprechend hohen Temperatur schmilzt und ebenfalls Verstärkungsfasern mit in die mindestens eine Kavität zieht.

Besonders bevorzugt wird als textiles Halbzeug ein textiles, ein- oder mehrlagiges Flächengebilde in Form eines Gewebes, Geleges, Gewirks, Gesticks, Geflechts oder Gestricks oder einer Mischform aus den vorgenannten textilen Flächengebilden verwendet. Das in das Presswerkzeug eingebrachte textile Halbzeug besteht hierbei vorzugsweise insgesamt ausschließlich aus Fasern, also insbesondere ausschließlich aus Thermoplastfasern und aus Verstärkungsfasern. Wie oben ausgeführt, können die Thermoplastfasern des textilen Halbzeugs insbesondere in Form von Hybridgarnen (thermoplastische Fasern mit Verstärkungsfasern) und/oder thermoplastischen Bindefasern vorliegen.

Durch die Verwendung eines textilen, ein- oder mehrlagigen Flächengebildes in Form eines Gewebes, Geleges, Gewirks, Gesticks, Geflechts oder Gestricks oder einer Mischform lassen sich inhomogene Strukturen insbesondere in Bezug auf die Verteilung der Verstärkungsfasern und/oder der Thermoplastfasern in dem textilen Flächengebilde herstellen, wobei diese inhomogenen Strukturen zweckmäßigerweise auf das Presswerkzeug und insbesondere die mindestens eine Kavität angepasst werden. Somit kann insbesondere ein gewünschtes inhomogenes Auflösen der Thermoplastfasern realisiert werden. Durch ein derart unterschiedliches Auflöseverhalten kann das Fließen der Verstärkungsfasern - einschließlich deren Fließrichtung und/oder deren Fließgeschwindigkeit - beeinflusst werden und somit auch eine gezielte Ausrichtung der Verstärkungsfasern realisiert werden. Auf diese Weise lassen sich speziell gewünschte Strukturen, insbesondere im Bereich der Kavitäten einschließlich der Übergänge zu den Kavitäten, realisieren, ohne dass die Verstärkungsfaserorientierung in den übrigen Bauteilbereichen hiervon beeinflusst wird.

Gemäß einer vorteilhaften Ausführungsform der Erfindung wird mindestens ein hinsichtlich seiner Flächenerstreckung inhomogenes textiles Halbzeug verwendet. Alternativ oder zusätzlich können mehrere textile Halbzeuge in den Innenraum des Presswerkzeugs eingelegt werden, die über ihre gesamte Flächenerstreckung eine variierende Dicke aufweisen können. In beiden Fällen ist es beispielsweise möglich, in Bereichen, in denen die mindestens eine Kavität vorgesehen ist, eine größere Dicke des mindestens einen textilen Halbzeugs und/oder lokal mindestens ein weiteres textiles Halbzeug vorzusehen. In beiden Fällen steht lokal mehr Thermoplast zum Fließen in die Kavität zur Verfügung, so dass diese problemlos vollständig gefüllt werden kann. Insgesamt kann somit ein homogener Faserkunststoffverbund erhalten werden.

Beim erfindungsgemäßen Verfahren kann mindestens ein textiles Halbzeug verwendet werden, für das, vorzugsweise in Bezug auf die Verstärkungsfasern und/oder die Thermoplastfasern, mindestens eines der folgenden Kriterien gilt:
- unterschiedliche mittlere Faserlängen in unterschiedlichen Bereichen des mindestens einen textilen Halbzeugs;
- unterschiedliche Faserlängenverteilungen in unterschiedlichen Bereichen des mindestens einen textilen Halbzeugs;
- unterschiedliche Faserarten in unterschiedlichen Bereichen des mindestens einen textilen Halbzeugs;
- unterschiedliche Thermoplaste in unterschiedlichen Bereichen des mindestens einen textilen Halbzeugs;
- unterschiedliche Dicken in unterschiedlichen Bereichen des mindestens einen textilen Halbzeugs.

Je nach gewünschtem Anforderungsprofil des fertigen Faserkunststoffverbundes bzw. FKV-Bauteils können somit unterschiedliche Parameter variiert werden.

Wenn das mindestens eine textile Halbzeug - vorzugsweise in Form eines Gewebes, Geleges, Gewirks, Gesticks, Geflechts oder Gestricks oder einer Mischform aus den vorgenannten textilen Flächengebilden - mit mehreren Lagen vorliegt, gilt für dieses textile Halbzeug vorzugsweise mindestens eines der folgenden Kriterien:
- unterschiedliche mittlere Faserlängen der Thermoplast- und/oder der Verstärkungsfasern in verschiedenen Lagen;
- unterschiedliche Faserlängenverteilungen der Thermoplast- und/oder der Verstärkungsfasern in verschiedenen Lagen;
- unterschiedliche Faserarten der Thermoplast- und/oder der Verstärkungsfasern in verschiedenen Lagen;
- unterschiedliche Thermoplaste der Thermoplastfasern in verschiedenen Lagen;
- unterschiedliche Lagendicken.

Auch hierbei kann dann durch die Wahl der Ausgestaltung des mindestens einen in das Presswerkzeug einzubringenden textilen Halbzeugs die finale Struktur des FKV-Bauteils gesteuert werden.

Vorzugsweise werden als Verstärkungsfasern mehrheitlich (bezogen auf die Faseranzahl der Verstärkungsfasern) Fasern im Längenbereich von 20 mm bis 120 mm verwendet. Bevorzugt weisen die Verstärkungsfasern mehrheitlich eine Länge ab 30 mm auf. Weiterhin bevorzugt weisen die Verstärkungsfasern mehrheitlich eine Länge bis 100 mm auf. Solche Faserlängen sind für ein optimiertes Fließverhalten der Verstärkungsfasern vorteilhaft, da diese schon im textilen Halbzeug relativ einfach in gewünschter Weise ausgerichtet werden können, um dann beim Aufschmelzen der Thermoplastfasern und beim Pressvorgang in gewünschter Weise zur bzw. in die mindestens eine Kavität fließen können. Kürzere und längere Verstärkungsfasern hingegen sind einerseits schwieriger zu verarbeiten. Zudem gewährleisten kürzere Verstärkungsfasern ggf. nicht die gewünschte Stabilität an sensiblen Stellen des fertigen Faserkunststoffverbundes. Längere Verstärkungsfasern hingegen können ein trägeres Fließverhalten aufweisen, was ebenfalls nicht erwünscht ist.

Gemäß einem bevorzugten Ausführungsbeispiel sind Verstärkungsfasern mit relativ kurzen Längen, d.h. mehrheitlich (bezogen auf die Faseranzahl der Verstärkungsfasern) im Bereich von weniger als 150 mm, vorzugsweise mehrheitlich mit einer Länge bis 100 mm, mit endlosen Thermoplastfasern, in dem mindestens einen textilen Halbzeug kombiniert. Die Thermoplastfasern sind hierbei vorzugsweise Filamente und können mit den Verstärkungsfasern beispielsweise verzwirnt sein oder als Seele eines Coregarns vorliegen, das mit den Verstärkungsfasern umsponnen ist.

Vorzugsweise enthalten die Thermoplastfasern ein Polyethylen, ein Polypropylen, Polyphenylensulfid (PPS), Polyetheretherketon (PEEK) und/oder ein Polyamid. Bevorzugt bestehen die Verstärkungsfasern 21 aus Glasfasern, Kohlenstofffasern und/oder Aramidfasern. Allgemein sind vorliegend unter dem Begriff "Verstärkungsfasern" bevorzugt künstlich hergestellte Fasern zu verstehen; es können beispielsweise aber auch Mischungen aus Kunstfasern und Naturfasern als Verstärkungsfasern eingesetzt werden oder auch ausschließlich Naturfasern, sofern sie die thermischen und mechanischen Voraussetzungen für den Einsatz erfüllen.

Gemäß einer vorteilhaften Erfindungsvariante wird der Innenraum des Presswerkzeugs von mehr als zwei Pressteilen ausgebildet. Hierbei kann beispielsweise auch seitlich an das textile Halbzeug mindestens ein Pressteil herangeführt werden. Auch ist es möglich, dass beispielsweise zwei Pressteile von oben auf das mindestens eine textile Halbzeug pressen, während das unterseitige Gegenstück als einteiliges Pressteil ausgebildet ist.

Die vorliegende Offenbarung betrifft weiterhin einen Faserkunststoffverbund, der nach einem wie vorbeschriebenen Verfahren hergestellt wurde. Der Faserkunststoffverbund weist in eine Thermoplastmatrix eingebettete Verstärkungsfasern auf und umfasst flächige Bereiche und von den flächigen Bereichen abstehende Funktionsstrukturen. Durch Einsatz des oben beschriebenen erfindungsgemäßen Verfahrens verlaufen einige der Verstärkungsfasern sowohl in den besagten flächigen Bereichen als auch in den Funktionsstrukturen. Diese in beiden Bereichen verlaufenden Verstärkungsfasern sind vorzugsweise durch das Hineinfließen bzw. Hineindrücken von flüssigem Thermoplast in die die Funktionsstruktur ausbildenden Kavitäten verursacht, wobei der Thermoplast die besagten Verstärkungsfasern mitnimmt. Ein Teil dieser Verstärkungsfasern befindet sich in der Regel vollständig in den Kavitäten, während ein anderer Teil in beiden Bereichen, d.h. einerseits in den flächigen Bereichen und andererseits in der Funktionsstruktur, verläuft. Im Vergleich zu dem aus dem Stand der Technik bekannten Anspritzen bilden diese in der Thermoplastmatrix eingebetteten Verstärkungsfasern ein gemeinsames Gefüge der flächigen Bauteil-Bereiche mit den Funktionsstrukturen, wobei durch diese ausgedehnte Faserverstärkung signifikant bessere mechanische Eigenschaften gegenüber den lediglich angespritzten Funktionsstrukturen erhalten werden, die ihrerseits keine Verstärkungsfasern aufweisen, welche sowohl in den flächigen Bereichen als auch in den Funktionsstrukturen verlaufen.

Besonders bevorzugt sind die Verstärkungsfasern mehrheitlich (bezogen auf deren Anzahl) Fasern im Längenbereich von 20 mm bis 120 mm, vorzugsweise mehrheitlich mit einer Länge ab 30 mm und/oder vorzugsweise mehrheitlich mit einer Länge bis 100 mm.

Vorzugsweise weist der Faserkunststoffverbund in Bezug auf die Verstärkungsfasern unterschiedliche mittlere Faserlängen, unterschiedliche Faserlängenverteilungen und/oder unterschiedliche Faserarten in unterschiedlichen Bereichen auf.

Die Erfindung wird nachfolgend anhand eines Ausführungsbeispiels näher erläutert. Die dazugehörigen Figuren zeigen unterschiedliche Schritte des erfindungsgemäßen Verfahrens:
- **Fig. 1**: eine geschnittene schematische Seitenansicht eines Presswerkzeugs mit einem ersten (unteren) und einem zweiten (oberen) Pressteil mit einem eingelegten zweilagigen textilen Halbzeug vor Verpressung;
- **Fig. 2**: das Presswerkzeug der Fig. 1 mit aufschmelzendem Thermoplast durch Wärmeapplikation, wobei zudem das zweite Pressteil des Presswerkzeugs betätigt wird;
- **Fig. 3**: das Presswerkzeug der Fig. 1 und 2 mit nachgeführtem zweitem Pressteil;
- **Fig. 4**: das Presswerkzeug der Fig. 1 bis 3 mit abgekühltem Thermoplast, und
- **Fig. 5**: das Presswerkzeug der Fig. 1 bis 4 mit geöffnetem Presswerkzeug und herausgenommenem Faserkunststoffverbund.

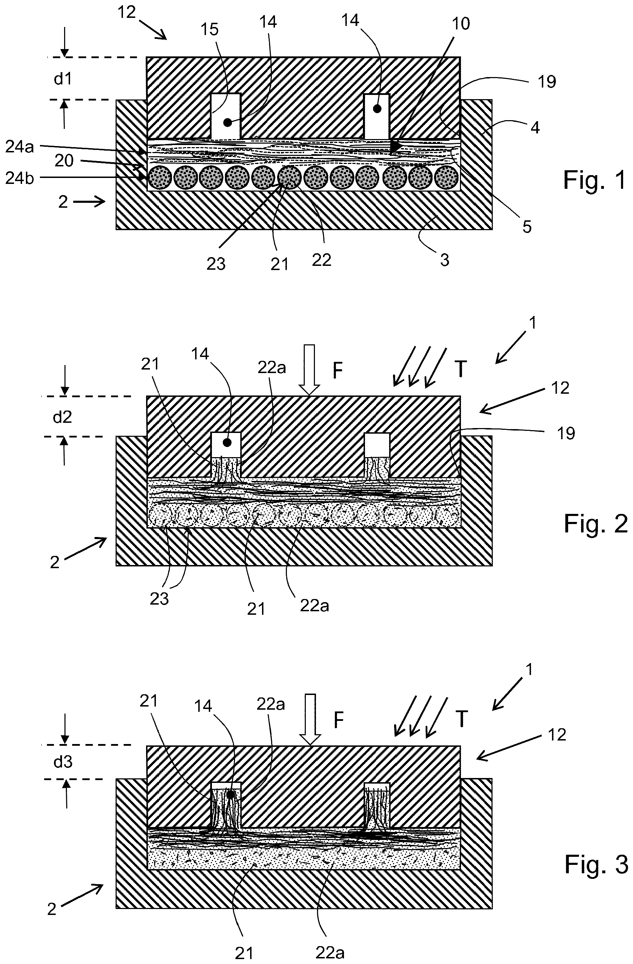

In der Fig. 1 ist im Querschnitt schematisch ein Presswerkzeug 1 dargestellt, mit dem das erfindungsgemäße Verfahren durchführbar ist. Das Presswerkzeug 1 weist ein erstes, unteres Pressteil 2 und ein zweites, oberes Pressteil 12 auf, die beide vorzugsweise aus Metall gefertigt sind. Das erste und zweite Pressteil 2, 12, weisen zueinander gerichtete, d.h. innere, Oberflächen 5, 15 auf, welche einen Innenraum 10 des Presswerkzeugs 1 ausbilden. Das erste Pressteil 2 weist vorliegend einen U-förmigen Querschnitt auf, wobei - im Querschnitt gesehen - eine Basis 3 und zwei seitliche Schenkel 4 vorgesehen sind. In der Draufsicht weist das erste Pressteil 2 beispielsweise eine rechteckige Einlegefläche zum Einlegen von mindestens einem textilen Halbzeug 20 auf (s.u.). An der Oberfläche 15 des zweiten Pressteils 12 sind zwei dreidimensionale Kavitäten 14 ausgebildet, die vorliegend im Querschnitt rechteckförmig ausgebildet und senkrecht nach oben ausgerichtet sind. Die Kontur der Oberfläche 15 des zweiten Pressteils 12 ist somit im Querschnitt eine Abfolge von mehreren senkrecht zueinander verlaufenden Linien; während die einen Linien parallel zur Basis 3 des ersten Pressteils 2 verlaufen, sind die anderen Linien senkrecht zur besagten Basis 3 ausgerichtet. Die Kavitäten 14 sind vorzugsweise in Form von Gravuren ausgestaltet.

Es sind prinzipiell unterschiedlichste Ausgestaltungen bzw. Geometrien von Kavitäten 14 verschiedenster Komplexität möglich, beispielsweise auch solche mit Hinterschneidungen. Auch ist die Anzahl von Kavitäten 14 prinzipiell beliebig wählbar.

Die Außenseiten des zweiten Pressteils 12 schließen mit den Innenseiten der seitlichen Schenkel 4 des ersten Pressteils 2 dichtend ab, wobei die beiden seitlichen Schenkel 4 den unteren Rand des zweiten Pressteils 12 überragen. Das zweite Pressteil 12 weist zudem eine Tauchkante 19 auf, d.h. das zweite Pressteil 12 kann in Richtung der Basis 3 des ersten Pressteils 2 nachgeführt werden, so dass das Presswerkzeug 1 als Fließpresswerkzeug ausgebildet ist.

In der Fig. 1 ist ein Abstand d1 zwischen der Oberkante eines seitlichen Schenkels 4 des ersten Pressteils 2 und der Oberseite des zweiten Pressteils 12 eingezeichnet.

Der Querschnitt der beiden Pressteile 2, 12 kann auf unterschiedlichste Art und Weise ausgebildet sein und richtet sich vornehmlich nach der gewünschten Geometrie und Struktur des finalen Faserkunststoffverbundes. Beispielsweise ist es möglich, dass eine oder mehrere Kavitäten alternativ oder zusätzlich im ersten Pressteil 2 vorhanden sind, in der Basis 3 und/oder in den seitlichen Schenkeln 4. Auch kann das Presswerkzeug 1 mehr als zwei Pressteile (vorliegend die beiden Pressteile 2, 12) aufweisen. Insbesondere bietet es sich an, wenn auch von einer oder beiden Seiten her mindestens jeweils ein Pressteil in Richtung des Innenraums 10 des Presswerkzeugs 1 nachführbar ist.

In das Presswerkzeug 1 ist entsprechend der Fig. 1 ein textiles Halbzeug 20 eingebracht, das beispielsweise und bevorzugt als Gewebe, Gelege, Gewirke, Gesticke, Geflecht oder Gestrick oder einer Mischform aus den vorgenannten textilen Flächengebilden ausgebildet ist. Somit kann das textile Halbzeug 20 an die speziellen Anforderungen des gewünschten fertigen Faserkunststoffverbundes angepasst werden. Das mindestens eine textile Halbzeug 20 kann insbesondere in Bezug auf seine Geometrie, den strukturellen Aufbau und hierbei insbesondere hinsichtlich Verteilung und Auswahl der Verstärkungsfasern (Material, Menge, Faserlängen und -dicken) passend angefertigt werden. Das textile Halbzeug 20 besteht vorliegend aus zwei senkrecht zueinander verlaufenden Lagen 24a, 24b aus Hybridgarn 23, wobei das Hybridgarn 23 aus Verstärkungsfasern 21 und Thermoplastfasern 22 (hier gestrichelt dargestellt) besteht. Die Verstärkungsfasern 21 und Thermoplastfasern 22 der Lage 24a verlaufen im Wesentlichen in Blattebene, während die Verstärkungsfasern 21 und Thermoplastfasern 22 der Lage 24b im Wesentlichen senkrecht zur Blattebene verlaufen.

Die Thermoplastfasern 22 sind beispielsweise aus einem Polyethylen, einem Polypropylen oder einem Polyamid, während die Verstärkungsfasern 21 beispielsweise Glasfasern, Kohlenstofffasern und/oder Aramidfasern sind. Das Hybridgarn 23 besteht vorliegend aus lose nebeneinander laufenden Verstärkungsfasern 21 und Thermoplastfasern 22. Es sind aber auch umwundene, verzwirnte, ummantelte etc. Hybridgarne verwendbar, beispielsweise in Form eines Coregarns, bei dem ein oder mehrere endlose Thermoplastfasern (Filamente) mit Verstärkungsfasern mit einer Länge von beispielsweise 30 mm bis 100 mm umsponnen sind.

Es ist im Rahmen der Erfindung bevorzugt, dass als Verstärkungsfasern 21 mehrheitlich (bezogen auf die Faseranzahl der Verstärkungsfasern 21) Fasern im Längenbereich von 20 mm bis 120 mm, vorzugsweise mehrheitlich mit einer Länge ab 30 mm und/oder vorzugsweise mehrheitlich mit einer Länge bis 100 mm, verwendet werden,

Das textile Halbzeug 20 gemäß dem beispielhaften Ausführungsbeispiel der Fig. 1 nimmt den Innenraum 10 des Presswerkzeugs 1 ein, allerdings mit Ausnahme der beiden Kavitäten 14, da das textile Halbzeug 20 eben ausgestaltet und auf die Innenseite der Basis 3 des ersten Pressteils 2 aufgelegt ist.

In der Fig. 2 ist schematisch dargestellt, dass Druck (symbolisiert durch den Buchstaben F unter Angabe der Druckrichtung mittels eines Pfeils) und Wärme (symbolisiert durch den Buchstaben T) dem zweiten Pressteil 12 zugeführt werden. Die Wärme wird vom zweiten Pressteil 12, das beispielsweise aus Edelstahl gefertigt ist, auf das textile Halbzeug 20 übertragen. Die Temperatur wird hierbei so hoch gewählt, dass sie über der Schmelztemperatur oder dem Schmelztemperaturbereich der Thermoplastfasern 22 liegt und demnach die Thermoplastfasern 22 schmelzen. Die schmelzenden Thermoplastfasern 22 der Hybridgarne 23 werden somit in eine Thermoplastmatrix 22a überführt, in welcher dann die benachbarten Verstärkungsfasern 21 eingebettet sind. Das allmähliche Auflösen der Hybridgarne 23 ist durch deren schwach gestrichelte kreisförmige Kontur in Fig. 2 angedeutet (vgl. mit Fig. 1).

Dieses Aufschmelzen der Thermoplastfasern 22 ermöglicht es, das zweite Pressteil 12 nachzuführen, d.h. weiter in Richtung des ersten Pressteils 2 zu schieben, wodurch der aufgeschmolzene Thermoplast aus den oberen Bereichen des textilen Halbzeugs 20 in die Kavitäten 14 gedrückt wird. Der Abstand zwischen der Oberkante des seitlichen Schenkels 4 des ersten Pressteils 2 und der Oberseite des zweiten Pressteils 12 wird kleiner (Abstand d2). Dieser Abstand d2 ist wiederum größer als der Abstand d3 entsprechend der Fig. 3, in der das zweite Pressteil 12 gegenüber der Fig. 2 noch weiter in Richtung des ersten Pressteils 2 nachgeführt wurde. Durch diesen sukzessiv voranschreitenden werkzeugseitigen Verdrängungsprozess, der auch als Fließpressen bezeichnet wird, nimmt die in die Kavitäten 14 fließende Thermoplastmatrix 22a die in ihr eingebetteten Verstärkungsfasern 21 mit, so dass in die Kavitäten 14 Teile der Thermoplastmatrix 22a und Verstärkungsfasern 21 gelangen. Auf diese Weise erheben sich von den sich eben erstreckenden, flächigen Bereichen 26 des textilen Halbzeugs 20 Strukturen, die nach Abschluss des Verfahrens die gewünschten Funktionsstrukturen ausbilden.

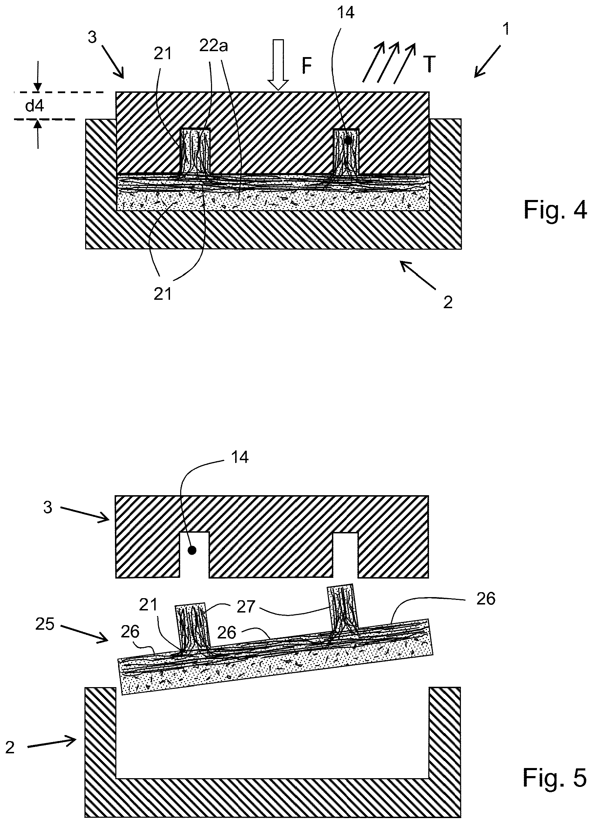

Beim weiterem Nachführen des zweiten Pressteils 12 - ggf. unter weiterem Aufschmelzen des Thermoplasts der Thermoplastfasern 22 - werden die Kavitäten 14 ganz ausgefüllt, wie dies in Fig. 4 dargestellt ist. Der Abstand d4 zwischen der Oberkante des seitlichen Schenkels 4 des ersten Pressteils 2 und der Oberseite des zweiten Pressteils 12 ist nun noch einmal kleiner als der Abstand d3 gemäß der Fig. 3. In diesem Zustand kann der Konsolidierungsschritt eingeleitet werden. Hierzu wird das Presswerkzeug 1, d.h. das untere und/oder das zweite Pressteil 2, 12 auf eine Temperatur abgekühlt, die unterhalb der Erstarrungstemperatur des Thermoplasts liegt, was in der Fig. 4 durch die vom zweiten Pressteil 12 wegzeigenden Pfeile mit der Bezeichnung "T" symbolisiert ist. Die Kühlung kann aktiv oder passiv, geregelt oder ungeregelt, mit mechanischem Kontakt zu einer Kühlquelle und/oder durch Konvektion erfolgen. Durch das Abkühlen verfestigen sich die flüssigen Bereiche der Thermoplastmatrix 22a.

Anschließend kann beispielsweise das zweite Pressteil 12 vom ersten Pressteil 2 entsprechend der Fig. 5 abgehoben werden, um den Faserkunststoffverbund 25 aus dem Presswerkzeug 1 zu entnehmen. Dieses Bauteil bzw. dieser Faserkunststoffverbund 25 weist nun die gewünschte Kontur auf, wobei die in den Kavitäten 14 geformten Funktionsstrukturen 27 von den flächigen Bereichen 26 abstehen.

Die Darstellung des Faserkunststoffverbundes 25 gemäß der Fig. 5 ist lediglich schematischer Natur. So ist beispielsweise nicht dargestellt, dass die Verstärkungsfasern der Hybridgarne 23 der unteren Lage 24b auch zum Teil in Richtung der Kavitäten 14 mitgerissen wurden.

In den Fig. 1-5 ist die Überführung eines gleichmäßig dicken textilen Halbzeugs 20 in einen Faserkunststoffverbund 25 dargestellt. Es ist aber auch ohne Weiteres möglich, ein textiles Halbzeug 20 zu verwenden, das im Bereich der Kavitäten 14 dicker ausgeführt ist, so dass ein Füllen der Kavitäten 14 beim Aufschmelzen der Thermoplastfasern 22 vereinfacht ist. Auch - alternativ oder zusätzlich - können mehrere textile Halbzeuge 20 in den Innenraum 10 eingelegt werden, welche vorzugsweise unterschiedlich groß sind. Im Bereich der Kavitäten 14 können beispielsweise mehr textile Halbzeuge 20 übereinander eingelegt werden als in Bereichen, die von den Kavitäten 14 weiter entfernt sind.

Bei einer weiteren, nicht dargestellten Alternative können schon einige der Verstärkungsfasern 21 in einer Thermoplastmatrix vorliegen, wobei das entsprechende textile Halbzeug 20 vor Einbringen in das Presswerkzeug 1 sowohl Thermoplastfasern 22 als auch eine Thermoplastmatrix aufweist. Beispielsweise kann ein Hybridgarn 23, bestehend aus Verstärkungsfasern und Thermoplastfasern, in eine Thermoplastmatrix eingebettet sein.

Weiterhin können alternativ oder zusätzlich zu Hybridgarnen 23, die Verstärkungsfasern 21 und Thermoplastfasern 22 umfassen, thermoplastische Bindefasern als Thermoplastfasern verwendet werden, welche Verstärkungsfasern 21 binden und deren gezieltes Herauslösen aus dem textilen Halbzeug 20 erlauben. Das textile Halbzeug 20 kann schon entsprechend dem anvisierten Aufbau des finalen Faserkunststoffverbundes 25 aufgebaut sein, wobei insbesondere die sich bei hinreichender Erwärmung auflösenden thermoplastischen Bindefasern im Bereich der Kavitäten 14 entsprechend platziert sind.

Weitere Parameter in Bezug auf die Verstärkungsfasern und/oder die Thermoplastfasern, welche entsprechend dem gewünschten Anforderungsprofil des Faserkunststoffverbundes 25 beim verwendeten textilen Halbzeug 20 eingestellt werden können, umfassen unterschiedliche mittlere Faserlängen, unterschiedliche Faserlängenverteilungen, unterschiedliche Faserarten, unterschiedliche Thermoplaste und/oder unterschiedliche Dicken in jeweils unterschiedlichen Bereichen des mindestens einen textilen Halbzeugs 20.

In diesem Zusammenhang ist es möglich, mindestens ein textiles Halbzeug 20 - insbesondere in Form eines Gewebes, Geleges, Gewirkes, Gestickes, Geflechts oder Gestrickes oder einer Mischform - zu verwenden, das eine inhomogene Verteilung der Verstärkungsfasern 21 und/oder der Thermoplastfasern 22 aufweist. Eine solche inhomogene Verteilung kann beispielsweise durch unterschiedliche lokale Garndichten von ansonsten homogenen, Thermoplastfasern 22 und Verstärkungsfasern 21 enthaltenden Garnen, z.B. Hybridgarnen 23, realisiert werden. Alternativ oder zusätzlich kann eine besagte inhomogene Verteilung mit unterschiedlichen, Thermoplastfasern 22 und Verstärkungsfasern 21 enthaltenden Garnen, z.B. Hybridgarnen 23, in benachbarten Bereichen des mindestens einen textilen Halbzeugs 20 erreicht werden. Weiterhin kann alternativ oder zusätzlich die besagte inhomogene Verteilung durch über ihre Länge inhomogene, Thermoplastfasern 22 und Verstärkungsfasern 21 enthaltende Garne, z.B. Hybridgarne 23, realisiert werden. Die vorgenannten inhomogenen Verteilungen lassen sich auch jeweils für die Thermoplastfasern 22 oder die Verstärkungsfasern 21 unabhängig voneinander realisieren, insbesondere, wenn diese nicht in Form von Hybridgarnen 23 vorliegen. Durch gezieltes Herstellen der besagten inhomogenen Verteilungen kann das Auflöse- und Fließverhalten der Thermoplastfasern 22 und/oder das Fließverhalten der Verstärkungsfasern 21 in Abhängigkeit von deren jeweiligen Verteilung in dem mindestens einen textilen Halbzeug 20 als auch in Abhängigkeit von der Geometrie des Presswerkzeugs 1 einschließlich der mindestens einen Kavität 14 beeinflusst werden, um eine gewünschte Stabilität des fertigen Faserkunststoffverbundes 25 zu erhalten.

Werden mehrlagige Strukturen für das textile Halbzeug 20, insbesondere in Form eines Gewebes, Geleges, Gewirks, Gesticks, Geflechts oder Gestricks oder einer Mischform aus den vorgenannten textilen Flächengebilden, verwendet, können in den verschiedenen Lagen in Bezug auf die Verstärkungsfasern und/oder die Thermoplastfasern unterschiedliche mittlere Faserlängen, unterschiedliche Faserlängenverteilungen, unterschiedliche Faserarten und/oder unterschiedliche Thermoplaste in jeweils unterschiedlichen Lagen und/oder auch unterschiedlichen Lagendicken eingesetzt werden, je nach dem gewünschten Anforderungsprofil des finalen Faserkunststoffverbundes 25.

Es ist ebenfalls möglich, nur einlagige textile Halbzeuge zu verwenden. Weiterhin können auch schon gebogene textile Halbzeuge (ein- oder mehrlagig) zum Einlegen in Presswerkzeuge verwendet werden.

Wie der Fig. 5 zu entnehmen ist, weist der erfindungsgemäß hergestellte Faserkunststoffverbund 25 die mit Hilfe der Kavitäten 14 erhaltenen Funktionsstrukturen 27 auf, die von den flächigen Bereichen 26 abstehen. Kennzeichnend für die erfindungsgemäß hergestellten Faserkunststoffverbünde 25 sind Verstärkungsfasern 21, deren eines Ende im Bereich der flächigen Bereiche 26 und deren anderes Ende sich in den Funktionsstrukturen 27 befinden, im Gegensatz zu den lediglich angespritzten Funktionsstrukturen gemäß dem Stand der Technik.

### Bezugszeichenliste

- 1: Presswerkzeug
- 2: erstes Pressteil
- 3: Basis
- 4: seitliche Schenkel
- 5: Oberfläche
- 10: Innenraum
- 12: zweites Pressteil
- 14: Kavität
- 15: Oberfläche
- 19: Tauchkante
- 20: textiles Halbzeug
- 21: Verstärkungsfasern
- 22: Thermoplastfasern
- 22a: Thermoplastmatrix
- 23: Hybridgarn
- 24a,b: Lagen des textilen Halbzeugs
- 25: Faserkunststoffverbund
- 26: flächige Bereiche
- 27: Funktionsstruktur

## Patentansprüche

1. Verfahren zum Herstellen eines Faserkunststoffverbundes (25), umfassend zumindest die folgenden Schritte:
mindestens ein sich flächig erstreckendes textiles Halbzeug (20), das zumindest Verstärkungsfasern (21) und Thermoplastfasern (22) enthält, wird in den Innenraum (10) eines Presswerkzeugs (1) eingebracht, wobei der besagte Innenraum (10) durch Oberflächen (5, 15) mindestens eines ersten Pressteils (2) und eines zweiten Pressteils (12) des Presswerkzeugs (1) begrenzt ist, und wobei zumindest in einer der besagten Oberflächen (5, 15) mindestens eine Kavität (14) ausgebildet ist, die vom eingelegten mindestens einen textilen Halbzeug (20) nicht ausgefüllt wird,
das textile Halbzeug (20) wird im Presswerkzeug (1) über die Schmelztemperatur oder den Schmelztemperaturbereich der Thermoplastfasern (22) erhitzt und Druck wird durch das Presswerkzeug (1) auf das textile Halbzeug (20) ausgeübt,
die Thermoplastfasern (22) schmelzen, wobei das erste und/oder das zweite Pressteil (2, 12) derart nachgeführt werden, dass geschmolzener Thermoplast in die mindestens eine Kavität (14) eindringt, wobei er bei dieser Bewegung Verstärkungsfasern (21) mitnimmt, so dass nun in der mindestens einen Kavität (14) eine Thermoplastmatrix (22a) und Verstärkungsfasern (21) vorhanden sind,
das textile Halbzeug (20) wird in dem Presswerkzeug (1) konsolidiert, indem das textile Halbzeug (20) unter die Erstarrungstemperatur des Thermoplasts abgekühlt wird, und
das textile Halbzeug (20) wird als Faserkunststoffverbund (25) aus dem Presswerkzeug (1) entnommen, **dadurch gekennzeichnet, dass** das mindestens eine textile Halbzeug eine inhomogene Verteilung der Verstärkungsfasern und/oder der Thermoplastfasern aufweist.

2. Verfahren nach Anspruch 1, **dadurch gekennzeichnet, dass** mindestens ein textiles Halbzeug (20) verwendet wird, bei dem Verstärkungsfasern (21) und Thermoplastfasern (22), vorzugsweise alle Verstärkungsfasern (21) und Thermoplastfasern (22), in einem Hybridgarn (23) vorliegen.

3. Verfahren nach mindestens einem der vorhergehenden Ansprüche, **dadurch gekennzeichnet, dass** Verstärkungsfasern (21) mit thermoplastischen Bindefasern verbunden sind, wobei zumindest ein Teil der thermoplastischen Bindefasern beim besagten Erhitzen schmilzt.

4. Verfahren nach mindestens einem der vorhergehenden Ansprüche, **dadurch gekennzeichnet, dass** mindestens ein textiles Halbzeug (20) verwendet wird, bei dem zusätzlich zu Thermoplastfasern (22) eine Thermoplastmatrix vorgesehen ist, wobei zumindest ein Teil der Thermoplastmatrix beim besagten Erhitzen schmilzt.

5. Verfahren nach mindestens einem der vorhergehenden Ansprüche, **dadurch gekennzeichnet, dass** als mindestens ein textiles Halbzeug (20) ein textiles, ein- oder mehrlagiges Flächengebilde in Form eines Gewebes, Geleges, Gewirks, Gesticks, Geflechts oder Gestricks oder einer Mischform aus den vorgenannten textilen Flächengebilden verwendet wird.

6. Verfahren nach mindestens einem der vorhergehenden Ansprüche, **dadurch gekennzeichnet, dass** mindestens ein hinsichtlich seiner Flächenerstreckung inhomogenes textiles Halbzeug (20) und/oder mehrere textile Halbzeuge (20) verwendet werden.

7. Verfahren nach mindestens einem der vorhergehenden Ansprüche, **dadurch gekennzeichnet, dass** mindestens ein textiles Halbzeug (20) verwendet wird, für das, vorzugsweise in Bezug auf die Verstärkungsfasern und/oder die Thermoplastfasern, mindestens eines der folgenden Kriterien gilt:
- unterschiedliche mittlere Faserlängen in unterschiedlichen Bereichen;
- unterschiedliche Faserlängenverteilungen in unterschiedlichen Bereichen;
- unterschiedliche Faserarten in unterschiedlichen Bereichen;
- unterschiedliche Thermoplaste in unterschiedlichen Bereichen;
- unterschiedliche Dicken in unterschiedlichen Bereichen.

8. Verfahren nach mindestens einem der vorhergehenden Ansprüche, **dadurch gekennzeichnet, dass** mindestens ein in Form eines Geleges, Gewirks oder Gestricks vorliegendes textiles Halbzeug (20) verwendet wird, für das, vorzugsweise in Bezug auf die Verstärkungsfasern und/oder die Thermoplastfasern, mindestens eines der folgenden Kriterien gilt:
- unterschiedliche mittlere Faserlängen in verschiedenen Lagen;
- unterschiedliche Faserlängenverteilungen in verschiedenen Lagen;
- unterschiedliche Faserarten in verschiedenen Lagen;
- unterschiedliche Thermoplaste in verschiedenen Lagen;
- unterschiedliche Lagendicken.

9. Verfahren nach mindestens einem der vorhergehenden Ansprüche, **dadurch gekennzeichnet, dass** als Verstärkungsfasern (21) mehrheitlich Fasern im Längenbereich von 20 mm bis 120 mm, vorzugsweise mehrheitlich mit einer Länge ab 30 mm und/oder vorzugsweise mehrheitlich mit einer Länge bis 100 mm, verwendet werden.

10. Verfahren nach mindestens einem der vorhergehenden Ansprüche, **dadurch gekennzeichnet, dass** die Thermoplastfasern (22) ein Polyethylen, ein Polypropylen, Polyphenylensulfid (PPS), Polyetheretherketon (PEEK) und/oder ein Polyamid enthalten, und/oder dass die Verstärkungsfasern (21) aus Glasfasern, Kohlenstofffasern und/oder Aramidfasern bestehen.

11. Verfahren nach mindestens einem der vorhergehenden Ansprüche, **dadurch gekennzeichnet, dass** der Innenraum (10) von mehr als zwei Pressteilen (2, 12) ausgebildet wird, wobei beispielsweise auch seitlich an das mindestens eine textile Halbzeug (20) mindestens ein Pressteil herangeführt wird.

## Claims

1. A method for producing a fiber-reinforced plastic composite (25) comprising at least the following steps:
at least one planar textile semi-finished good (20) comprising at least reinforcing fibers (21) and thermoplastic fibers (22) is introduced into the interior space (10) of a press tool (1), said interior space (10) being delimited by surfaces (5, 15) of at least a first press part (2) and a second press part (12) of the press tool (1), and at least one cavity (14) being implemented at least in one of said surfaces (5, 15), not being filled by the at least one inserted textile semi-finished good (20),
the textile semi-finished good (20) is heated in the press tool (1) above the melting point or the melting temperature range of the thermoplastic fibers (22) and pressure is exerted on the textile semi-finished good (20) by the press tool (1),
the thermoplastic fibers (22) melt, the first and/or the second press part (2, 12) being retracted such that molten thermoplastic enters the at least one cavity (14), said thermoplastic carrying along reinforcing fibers (21) in this motion, so that a thermoplastic matrix (22a) and reinforcing fibers (21) are now present in the at least one cavity (14),
the textile semi-finished good (20) is consolidated in the press tool (1) in that the textile semi-finished good (20) is cooled below the solidification temperature of the thermoplastic, and
the textile semi-finished good (20) is removed from the press tool (1) as a fiber-reinforced plastic composite (25),
**characterized in that** the at least one textile semi-finished good comprises an inhomogeneous distribution of the reinforcing fibers and/or of the thermoplastic fibers.

2. The method according to claim 1, **characterized in that** at least one textile semi-finished good (20) is used, wherein reinforcing fibers (21) and thermoplastic fibers (22), preferably all reinforcing fibers (21) and thermoplastic fibers (22), are present in a hybrid yarn (23).

3. The method according to at least one of the preceding claims, **characterized in that** reinforcing fibers (21) are bonded to thermoplastic binding fibers, wherein at least part of the thermoplastic binding fibers melt when so heated.

4. The method according to at least one of the preceding claims, **characterized in that** at least one textile semi-finished good (20) is used, wherein a thermoplastic matrix is provided in addition to thermoplastic fibers (22), wherein at least part of the thermoplastic matrix melts when so heated.

5. The method according to at least one of the preceding claims, **characterized in that** a textile, single or multi-layer web material is used as at least one textile semi-finished good (20) in the form of a woven fabric, mat, warp knitted fabric, embroidery, mesh, or weft knitted fabric, or a mixed form of the above textile web materials.

6. The method according to at least one of the preceding claims, **characterized in that** at least one textile semi-finished good (20) inhomogeneous with respect to the planar extent thereof and/or a plurality of textile semi-finished goods (20) are used.

7. The method according to at least one of the preceding claims, **characterized in that** at least one textile semi-finished good (20) is used for which at least one of the following criteria applies, preferably with respect to the reinforcing fibers and/or the thermoplastic fibers:
- different average fiber lengths in different regions;
- different fiber length distributions in different regions;
- different fiber types in different regions;
- different thermoplastics in different regions;
- different thicknesses in different regions.

8. The method according to at least one of the preceding claims, **characterized in that** at least one textile semi-finished good (20) present in the form of a mat, weft knitted fabric, or warp knitted fabric is used for which at least one of the following criteria applies, preferably with respect to the reinforcing fibers and/or the thermoplastic fibers:
- different average fiber lengths in different layers;
- different fiber length distributions in different layers;
- different fiber types in different layers;
- different thermoplastics in different layers;
- different layer thicknesses.

9. The method according to at least one of the preceding claims, **characterized in that** a majority of fibers in the range of length from 20 mm to 120 mm, preferably a majority having a length above 30 mm and/or preferably a majority having a length of up to 100 mm, are used as reinforcing fibers (21).

10. The method according to at least one of the preceding claims, **characterized in that** the thermoplastic fibers (22) comprise a polyethylene, a polypropylene, polyphenylene sulfide (PPS), polyether-ether-ketone (PEEK), and/or a polyamide, and/or **in that** the reinforcing fibers (21) are made of glass fibers, carbon fibers, and/or aramid fibers.

11. The method according to at least one of the preceding claims, **characterized in that** the interior space (10) is implemented by more than two press parts (2, 12), wherein at least one press part is introduced laterally as well to the at least one textile semi-finished good (20).

## Revendications

1. Procédé pour fabriquer un composite de matière plastique renforcé par des fibres (25), comprenant au moins les étapes suivantes :
au moins un produit textile semi-fini (20) s'étendant planaire, qui contient au moins des fibres de renforcement (21) et des fibres thermoplastiques (22), est introduit dans l'espace intérieur (10) d'un outil de pressage (1), ledit espace intérieur (10) étant délimité par des surfaces (5, 15) d'au moins une première pièce de pressage (2) et d'une deuxième pièce de pressage (12) de l'outil de pressage (1), et au moins une cavité (14) étant formée dans au moins l'une desdites surfaces (5, 15), laquelle n'est pas remplie par le au moins un produit textile semi-fini (20) inséré,
le produit textile semi-fini (20) est chauffé dans l'outil de pressage (1) au-delà de la température de fusion ou de la plage de températures de fusion des fibres thermoplastiques (22) et une pression est exercée par l'outil de pressage (1) sur le produit textile semi-fini (20),
les fibres thermoplastiques (22) fondent, la première et/ou la deuxième pièce(s) de pressage (2, 12) étant rajustée(s) de sorte que de la matière thermoplastique fondue pénètre dans la, au moins une, cavité (14), entraînant des fibres de renforcement (21) lors de ce mouvement, de sorte qu'une matrice thermoplastique (22a) et des fibres de renforcement (21) sont maintenant présentes dans la, au moins une, cavité (14),
le produit textile semi-fini (20) est consolidé dans l'outil de pressage (1) en ce sens que le produit textile semi-fini (20) est refroidi endeçà de la température de solidification du thermoplastique, et
le produit textile semi-fini (20) est retiré de l'outil de pressage (1) sous forme de composite de matière plastique renforcé par des fibres (25),
**caractérisé en ce que** le, au moins un, produit textile semi-fini présente une répartition inhomogène des fibres de renforcement et/ou des fibres thermoplastiques.

2. Procédé selon la revendication 1, **caractérisé en ce que** au moins un produit textile semi-fini (20) est utilisé, dans lequel des fibres de renforcement (21) et des fibres thermoplastiques (22), de préférence toutes les fibres de renforcement (21) et les fibres thermoplastiques (22), sont présentes dans un fil hybride (23).

3. Procédé selon l'une au moins des revendications précédentes, **caractérisé en ce que** des fibres de renforcement (21) sont associées à des fibres de liaison thermoplastiques, au moins une partie des fibres de liaison thermoplastiques fondant lors dudit chauffage.

4. Procédé selon l'une au moins des revendications précédentes, **caractérisé en ce qu'**au moins un produit textile semi-fini (20) est utilisé, dans lequel est prévue une matrice thermoplastique en plus de fibres thermoplastiques (22), au moins une partie de la matrice thermoplastique fondant lors dudit chauffage.

5. Procédé selon l'une au moins des revendications précédentes, **caractérisé en ce que** l'on utilise comme au moins un produit textile semi-fini (20) une structure textile planaire à une ou plusieurs couches sous la forme d'un tissu, d'une nappe, d'une bonneterie, d'une broderie, d'une tresse ou d'un tricot ou d'une forme mixte des structures textiles planaires précitées.

6. Procédé selon l'une au moins des revendications précédentes, **caractérisé en ce que** l'on utilise au moins un produit textile semi-fini (20) inhomogène en termes d'étendue de sa surface et/ou plusieurs produits textiles semi-finis (20).

7. Procédé selon au moins l'une des revendications précédentes, **caractérisé en ce que** l'on utilise au moins un produit textile semi-fini (20) pour lequel, de préférence en ce qui concerne les fibres de renforcement et/ou les fibres thermoplastiques, l'un au moins des critères suivants s'applique :
- différentes longueurs moyennes de fibres dans différentes zones ;
- différentes répartitions de longueurs des fibres dans différentes zones ;
- différents types de fibres dans différents zones ;
- différents thermoplastiques dans différents zones ;
- différentes épaisseurs dans différentes zones.

8. Procédé selon au moins l'une des revendications précédentes, **caractérisé en ce que** l'on utilise au moins un produit textile semi-fini (20) présent sous forme de nappe, de bonneterie ou de tricot pour lequel, de préférence en ce qui concerne les fibres de renforcement et/ou les fibres thermoplastiques, l'un au moins des critères suivants s'applique :
- différentes longueurs moyennes de fibres dans différentes couches ;
- différentes répartitions de la longueur des fibres dans différentes couches ;
- différents types de fibres dans différentes couches ;
- différents thermoplastiques dans différentes couches ;
- différentes épaisseurs de couches.

9. Procédé selon au moins l'une des revendications précédentes, **caractérisé en ce que** l'on utilise comme fibres de renforcement (21) majoritairement des fibres dans la plage de longueur de 20 mm à 120 mm, de préférence majoritairement des fibres ayant une longueur à partir de 30 mm et/ou de préférence majoritairement des fibres ayant une longueur jusqu'à 100 mm.

10. Procédé selon au moins l'une des revendications précédentes, **caractérisé en ce que** les fibres thermoplastiques (22) contiennent un polyéthylène, un polypropylène, un poly(sulfure de phénylène) (PPS), une polyétheréthercétone (PEEK) et/ou un polyamide, et/ou **en ce que** les fibres de renforcement (21) sont constituées de fibres de verre, de fibres de carbone et/ou de fibres d'aramide.

11. Procédé selon au moins l'une des revendications précédentes, **caractérisé en ce que** l'espace intérieur (10) est formé par plus de deux pièces de pressage (2, 12), au moins une pièce de pressage étant par exemple également amenée latéralement à l'au moins un produit textile semi-fini (20).
